# EUROPÄISCHE PATENTANMELDUNG

(11) **EP 1 612 024 A1**
(43) Veröffentlichungstag der Anmeldung: **04.01.2006**
(21) Anmeldenummer: 05009639.5
(22) Anmeldetag: 03.05.2005
(51) Int. Cl.: B29C 45/16, B62D 29/00, B60R 13/04

(54) **Verfahren zur Herstellung eines Verbund-Bauteils sowie Verbund-Bauteil**

(30) Priorität: 03.07.2004 DE 102004032362
(71) Anmelder: REHAU AG + Co, 95111 Rehau (DE)
(72) Erfinder: Scherer, Anton, 95111 Rehau (DE); Schuster, Uwe, 95189 Köditz (DE); Thümler, Matthias, 95028 Hof (DE); Riepenhausen, Holm, 95111 Rehau (DE); Grundmann, Markus, 95460 Bad Berneck (DE)

(57) **Zusammenfassung**

Ein Verbund-Bauteil (1) mit einer Trägerkomponente (2) und einer Deckkomponente (10) aus Kunststoff und einer zwischen diesen Komponenten (2, 10) angeordneten Armierungskomponente (11) aus Metall wird folgendermaßen hergestellt: Zunächst wird die Armierungskomponente (11) hergestellt. Anschließend wird letztere in einer Spritzgussform (24, 26) eines Spritzgusswerkzeugs (20) bereitgestellt. Sodann erfolgt ein Mehrkomponenten-Spritzgießen der Trägerkomponente (2) und der Deckkomponente (10) in der Spritzgussform (20). Schließlich wird das Verbund-Bauteil (1) aus der Spritzgussform (24, 26) entnommen. Es resultiert ein Verbund-Bauteil mit gut kontrollierbarer thermischer Längenausdehnung und hoher Steifigkeit, welches kostengünstig hergestellt werden kann.

## Beschreibung

Die Erfindung betrifft ein Verfahren zur Herstellung eines Verbund-Bauteils nach dem Oberbegriff des Anspruchs 1. Ferner betrifft die Erfindung ein Verbund-Bauteil nach dem Oberbegriff des Anspruchs 6.

Ein gattungsgemäßes Verbund-Bauteil sowie ein Herstellungsverfahren hierfür sind zum Beispiel bekannt aus der EP 0 335 208 B1 und der DE 34 15 379 A1. Dort wird die Trägerkomponente mitsamt der Stahlarmierung extrudiert. Auf dieses Zwischenprodukt wird die Deckkomponente an- bzw. aufgespritzt. Dieses Herstellungsverfahren ist aufwendig. Hiermit hergestellte Verbund-Bauteile haben oft zu große Gesamtbauteiltoleranzen. Auch unerwünschte Oberflächendefizite treten auf.

Es ist daher eine Aufgabe der vorliegenden Erfindung, ein Verfahren der eingangs genannten Art zur Herstellung eines Verbund-Bauteils zu schaffen, welches kostengünstiger durchführbar ist und möglichst gleichzeitig auch zu einem qualitativ verbesserten Verbund-Bauteil führt.

Diese Aufgabe ist erfindungsgemäß gelöst durch ein Verfahren mit den Merkmalen des Kennzeichnungsteils des Anspruchs 1.

Erfindungsgemäß wurde erkannt, dass sowohl die Trägerkomponente als auch die Deckkomponente durch Spritzgießen hergestellt werden können. Dabei wird die Armierungskomponente in die Spritzgussform eingelegt und die sie umgebenden beiden Kunststoffkomponenten werden durch einen Mehrkomponenten-Spritzvorgang hergestellt. Die beiden Kunststoffkomponenten werden daher mit dem gleichen Typ eines Fertigungsverfahrens, nämlich durch Spritzgießen, mit der Armierungskomponente verbunden. Zur Verbesserung dieser Verbindung kann die Armierungskomponente mit mindestens einer Haftvermittlerschicht versehen sein. Die Oberflächenbeschaffenheit des so hergestellten Verbund-Bauteils ist definiert durch die Beschaffenheit der Wandung der Spritzgussform. Es lassen sich daher Verbund-Bauteile mit guter Oberflächenqualität herstellen. Befestigungselemente lassen sich an die Trägerkomponente direkt während des Mehrkomponenten-Spritzgießens mit anformen. Dies reduziert den Fertigungsaufwand zusätzlich. Außerdem ist ein Verbund-Bauteil mit geringem Gewicht realisierbar.

Die beiden alternativen Herstellungsverfahren nach den Ansprüchen 2 und 3 eignen sich zur Massenproduktion von Verbund-Bauteilen. Die Spritzgusswerkzeuge können dabei insbesondere so ausgestaltet sein, dass zumindest der Hauptteil der notwendigen Verlagerungsbewegung durch einen Werkzeugabschnitt erfolgt, der keinen Angusskanal aufweist. Insbesondere ist ein zyklischer Serien-Herstellungsprozess möglich.

Ein Verfahren nach Anspruch 4 ist zeitsparend. Mehrere notwendige Verfahrensschritte laufen simultan ab.

Eine Herstellung der Armierungskomponente nach Anspruch 5 erlaubt eine Massenproduktion der Armierungskomponente mit geringen Fertigungstoleranzen.

Eine weitere Aufgabe der vorliegenden Erfindung ist es, ein gattungsgemäßes Verbund-Bauteil hinsichtlich seiner Qualität zu verbessern.

Diese Aufgabe ist erfindungsgemäß gelöst durch ein Verbund-Bauteil mit den Merkmalen des Kennzeichnungsteils des Anspruchs 6.

Ein derartiges Verbund-Bauteil hat die Vorteile, die oben im Zusammenhang mit dem Herstellungsverfahren schon angesprochen wurden.

Ein Verbund-Bauteil nach Anspruch 7 kann an unterschiedliche Anforderungen für die Trägerkomponente einerseits und die Deckkomponente andererseits angepasst werden.

Eine Armierungskomponente nach Anspruch 8 führt zu einem Verbund-Bauteil mit einem vorteilhaft niedrigen Längenausdehnungskoeffizienten. Die Armierungskomponente kann auch aus Aluminium oder einem Faserverbundwerkstoff gefertigt sein.

Befestigungselemente nach Anspruch 9 oder 10 sind unverlierbar und führen zu einem Verbund-Bauteil mit niedrigem Gewicht. Auf zusätzliche Verbindungselemente kann in vielen Fällen verzichtet werden.

Bei einem Verbund-Bauteil nach Anspruch 11 ist eine abzeichnungsfreie Anbindung der Befestigungselemente an der Trägerkomponente möglich. Überall dort, wo die Armierungskomponente die Trägerkomponente überdeckt, können an die Deckkomponente Befestigungs- oder auch andere Geometrieelemente angeformt werden, ohne dass sich diese von außen sichtbar an der Deckkomponente abzeichnen.

Ausführungsbeispiele der Erfindung werden nachfolgend anhand der Zeichnung näher erläutert. In dieser zeigen:
- Fig. 1 bis 3: Ausführungsvarianten eines Verbund-Bauteils mit einer Kunststoff-Trägerkomponente, einer Kunststoff-Deckkomponente und einer zwischen diesen angeordneten Metall-Armierungskomponente im Querschnitt;
- Fig. 4 bis 7: schematische Momentaufnahmen eines Verfahrens zur Herstellung eines Verbund-Bauteils nach den Fig. 1 bis 3 mit einem Spritzgusswerkzeug mit drei relativ zueinander beweglichen Werkzeugabschnitten; und
- Fig. 8 bis 12: schematische Momentaufnahmen eines alternativen Verfahrens zur Herstellung eines Verbund-Bauteils nach den Fig. 1 bis 3 mit einem Spritzgusswerkzeug mit zwei relativ zueinander beweglichen Werkzeugabschnitten.

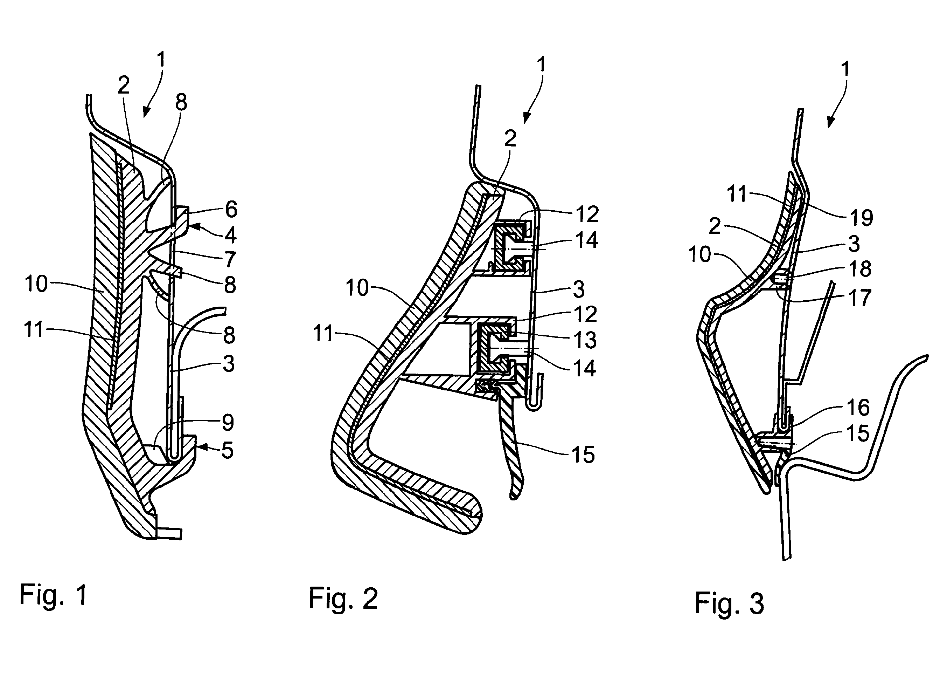

Die Fig. 1 bis 3 zeigen Varianten eines Verbund-Bauteils 1 am Beispiel einer Schutzleiste an der Türunterkante eines Pkw. Komponenten, die sich bei den Varianten nach den Fig. 1 bis 3 entsprechen, erhalten die gleichen Bezugszeichen und werden nicht wiederholt erläutert.

Nachfolgend wird zunächst das Verbund-Bauteil 1 nach Fig. 1 beschrieben. Das Verbund-Bauteil 1 umfasst eine Trägerkomponente 2 aus Kunststoff. Die Trägerkomponente 2 ist auf den unteren Abschnitt eines Tür-Karosserieelements 3 aufgerastet. Hierzu weist die Trägerkomponente 2 eine Mehrzahl von Paaren von Halteelementen 4, 5 auf, von denen in Fig. 1 eines dargestellt ist. Die Halteelemente 4, 5 sind einstückig an die Trägerkomponente 2 angeformt.

Das Haken-Halteelement 4 jedes Halteelement-Paares hat einen Haken 6, der eine Durchtrittsöffnung 7 im Tür-Karosserieelement 3 hintergreift. Ferner weist das Haken-Halteelement 4 insgesamt drei übereinander an der Trägerkomponente 2 angeformte Distanzstege 8 auf, die für eine definierte Positionierung der Trägerkomponente 2 zum Tür-Karosserieelement 3 sorgen.

Der mittlere Distanzsteg 8 hält dabei den Haken 6 in Position. Die anderen beiden Distanzstege 8 dienen als Abstandshalter der Trägerkomponente 2 zum Tür-Karosserieelement 3.

Zu jedem Halteelement-Paar gehört neben dem Haken-Halteelement 4 noch ein Rast-Halteelement 5. Letzteres umgreift partiell den unteren Abschnitt des Tür-Karosserieelements 3. Dieser untere Abschnitt liegt an der Trägerkomponente 2 dort, wo längs des Tür-Karosserieelements 3 kein Rast-Halteelement 5 vorliegt, über Abstützrippen 9 an der Trägerkomponente 2 an.

Zur Fahrzeugaußenseite hin ist das Verbund-Bauteil 1 durch eine Deckkomponente 10 abgedeckt. Letztere ist ebenfalls aus Kunststoff, wobei je nach Anwendungsfall der gleiche Kunststoff zum Einsatz kommen kann wie der, aus dem die Trägerkomponente 2 gefertigt ist, oder auch ein anderer Kunststoff. Die Deckkomponente 10 ist derart geformt, dass sie mit der sichtbaren äußeren Fahrzeugkarosserie bündig abschließt.

Zwischen der Trägerkomponente 2 und der Deckkomponente 10 ist eine Armierungskomponente 11 aus Metall, insbesondere aus Stahl, angeordnet. Letztere dient zur Verstärkung des Verbund-Bauteils. Die Armierungskomponente 11 gibt zudem die Längenausdehnung des Verbund-Bauteils vor, so dass Unterschiede in den Längenausdehnungskoeffizienten der Trägerkomponente 2 bzw. der Deckkomponente 10 nicht ins Gewicht fallen. Die Armierungskomponente 11 überdeckt die Haken-Halteelemente 4. Hierdurch ist sicher verhindert, dass sich die Haken-Halteelemente 4 unerwünscht nach außen hin durch die Deckkomponente 10 abzeichnen.

Nachfolgend wird das Verbund-Bauteil 1 nach Fig. 2 beschrieben. Die Trägerkomponente 2 weist als Halteelemente einstückig angeformte Haltekammern 12 auf. Jeweils zwei übereinander angeordnete Haltekammern 12 bilden ein Halteelement-Paar, welches dem im Zusammenhang mit Fig. 1 beschriebenen Halteelement-Paar entspricht. Die Haltekammern 12 sind zum Tür-Karosserieelement 3 hin offen. In die Haltekammern 12 sind im Querschnitt C-förmige Clipselemente 13 aus Polyoxymethylen (POM) eingelegt. Die Clipselemente 13 sind dabei so orientiert, dass sich im Querschnitt die C-Form ebenfalls zum Tür-Karosserieelement 3 hin öffnet. In die Clipselemente 13 greifen die Köpfe von T-Bolzen 14 ein, die ihrerseits an das Tür-Karosserieelement 3 angeschweißt sind. Zwischen der Trägerkomponente 2 und dem Tür-Karosserieelement 3 ist unterhalb der unteren Halteklammer 12 ein Aufnahmeabschnitt einer Dichtlippe 15 angeordnet.

Letztere liegt bei geschlossener Tür an einem rahmenfesten Karosserieteil an, welches nicht dargestellt ist. Bei der Ausführung nach Fig. 2 ist die Armierungskomponente 11 eine vorgeformte Metallfolie mit einer Stärke im Bereich von etwa 0,5 mm.

Nachfolgend wird das Verbund-Bauteil nach Fig. 3 beschrieben. Ein Halteelement-Paar weist bei dieser Ausführung ein Umgriffs-Halteelement 16 auf, welches einstückig an der Trägerkomponente 2 angeformt ist und die untere Abschlusskante des Tür-Karosserieelements 3 umgreift. Ferner gehört zu dem Halteelement-Paar noch ein ebenfalls einstückig an die Trägerkomponente 2 angeformtes Clipselement 17. Letzteres nimmt einen Clipsbolzen 18 auf, der seinerseits am Tür-Karosserieelement 3 festgelegt ist. Im Bereich des oberen Abschlusses des Verbund-Bauteils 1 ist bei der Ausführung nach Fig. 3 zwischen der Trägerkomponente 2 und dem Tür-Karosserieelement 3 ein Klebeband 19 angeordnet. Letzteres verhindert insbesondere, dass das Verbund-Bauteil 1 am Tür-Karosserieelement 3 scheuert. Die Armierungskomponente 11 ist bei der Ausführung nach Fig. 3 eine Metallfolie mit einer Stärke von etwa 0,4 mm.

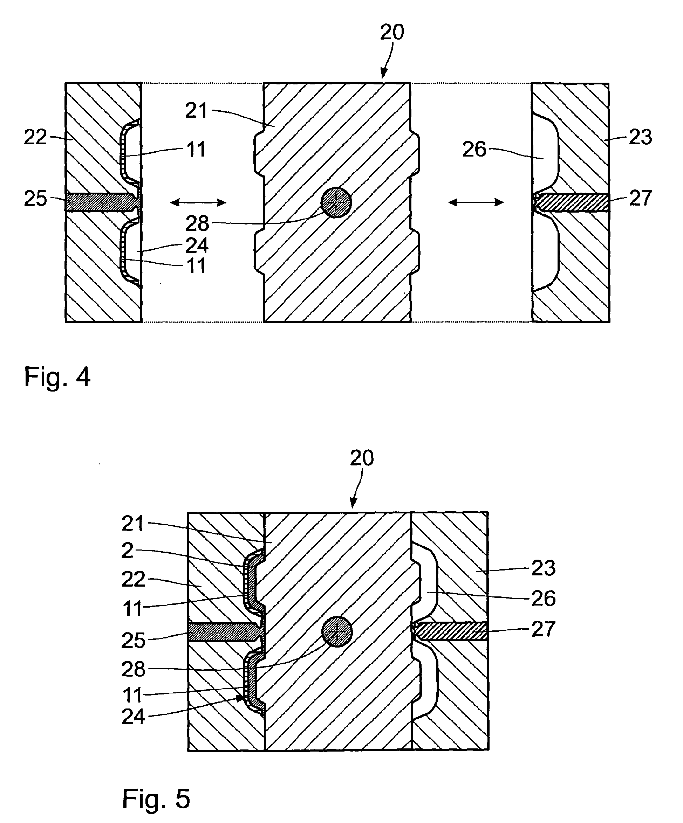

Ein erstes Verfahren zur Herstellung eines Verbund-Bauteils 1 nach den Fig. 1 bis 3 ist in verschiedenen Momentaufnahmen schematisch in den Fig. 4 bis 7 dargestellt.

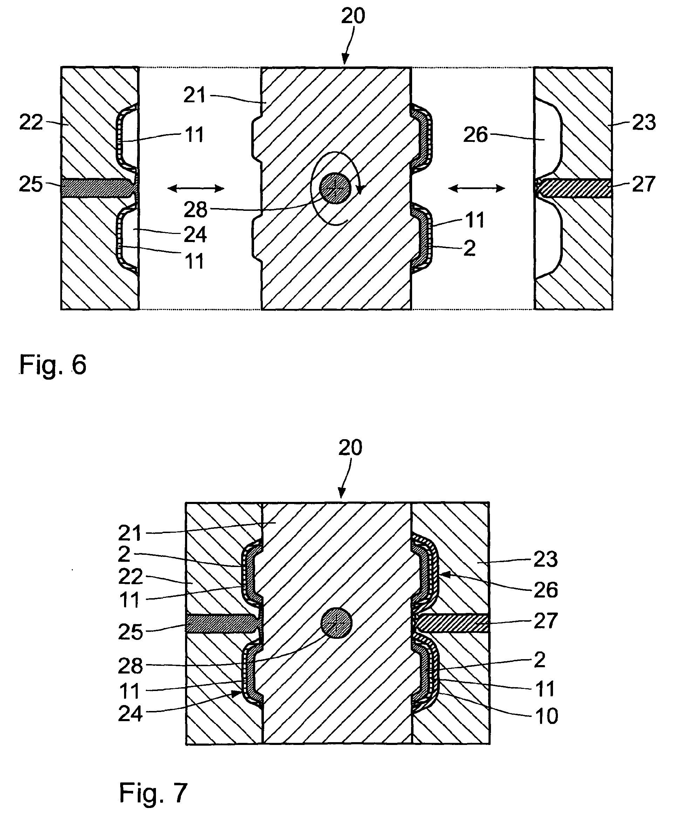

Dieses Verfahren findet statt mit Hilfe eines Spritzgusswerkzeugs 20 mit drei relativ zueinander beweglichen Werkzeugabschnitten. Ein Mittelabschnitt 21 liegt hierbei zwischen zwei Randabschnitten 22, 23. Die Randabschnitte 22, 23 sind relativ zum Mittelabschnitt 21 längs zweier in Fig. 4 dargestellter Doppelpfeile verlagerbar. Zwischen dem Mittelabschnitt 21 und dem ersten, in den Fig. 4 bis 7 linken, Randabschnitt 22 sind bei geschlossenem Spritzgusswerkzeug 20 (vgl. Fig. 5 und 7) zwei erste Spritzgussformabschnitte 24 begrenzt. Letztere dienen zur Ausformung einer ersten Spritzgusskomponente des Verbund-Bauteils 1, nämlich der Trägerkomponente 2. Hin zu den beiden ersten Spritzgussformabschnitten 24 verläuft ein erster Angusskanal 25 im linken Randabschnitt 22. Zwischen dem Mittelabschnitt 21 und dem zweiten, in den Fig. 4 bis 7 rechten, Randabschnitt 23 sind bei geschlossenem Spritzgusswerkzeug 20 zwei zweite Spritzgussformabschnitte 26 begrenzt. Letztere dienen zur Ausformung einer zweiten Spritzgusskomponente des Verbund-Bauteils 1, nämlich der Deckkomponente 10. Hin zu den beiden zweiten Spritzgussformabschnitten 26 verläuft ein zweiter Angusskanal 27. Letzterer ist im rechten Randabschnitt 23 ausgeführt. Der Mittelabschnitt 21 ist um eine senkrecht zur Zeichenebene der Fig. 4 bis 7 verlaufende mittige Drehachse 28 drehbar.

Mit dem dreiteiligen Spritzgusswerkzeug 20 wird das Verbund-Bauteil 1 folgendermaßen hergestellt: Zunächst liegt das Spritzgusswerkzeug 20 in der in Fig. 4 dargestellten Offenstellung vor. Zwei in einem Vorbereitungsschritt durch Tiefziehen hergestellte Armierungskomponenten 11 werden in die beiden ersten Spritzgussformabschnitte 24 eingelegt. Die Armierungskomponenten 11 sind beidseitig mit einer Haftvermittlerschicht versehen. Derartige Haftvermittlerschichten sind dem Fachmann bekannt.
Die beiden Armierungskomponenten 11 einerseits und die ersten Spritzgussformabschnitte 24 im Bereich des linken Randabschnitts 22 sind derart zueinander komplementär geformt, dass die eingelegten Armierungskomponenten 11 flächig am linken Randabschnitt 22 des Spritzgusswerkzeugs 20 anliegen. Sodann wird das Spritzgusswerkzeug 20 geschlossen, so dass es in der in Fig. 5 dargestellten Schließstellung vorliegt. Anschließend wird durch den ersten Angusskanal 25 eine erste plastifizierte Kunststoffmasse in die beiden ersten Spritzgussformabschnitte 24 eingefüllt. Beim allerersten Befüllen der Spritzgussformabschnitte 24 kann ein Befüllen der zweiten Spritzgussformabschnitte 26 zwischen dem Mittelabschnitt 21 und dem rechten Randabschnitt 23 unterbleiben. Alternativ kann die erste Füllung der zweiten Spritzgussformabschnitte 26 verworfen werden. Die Füllung der ersten Spritzgussformabschnitte 24 hat zunächst eine Temperatur, die so hoch ist, dass der Haftvermittler der Haftvermittlerschicht der Armierungskomponente 11, die der plastifizierten Kunststoffmasse zugewandt ist, anspringt. Die aushärtende Kunststoffmasse verbindet sich auf diese Weise fest mit der Armierungskomponente 11.

Da die Kunststoffmasse am Mittelabschnitt 21 stärker haftet, als die Armierungskomponente 11 am Randabschnitt 22, bleibt der erzeugte Verbund aus der Armierungskomponente 11 und der ersten Spritzgusskomponente, also der Trägerkomponente 2, am Mittelabschnitt 21 haften. Dieser Verbund wird nachfolgend auch als Zwischenbauteil oder Zwischenprodukt bezeichnet. Nachfolgend wird das Spritzgusswerkzeug 20 wieder in die Offenstellung verbracht. Der Mittelabschnitt 21 wird dann um die Drehachse 28 um 180° gedreht. Die Stellung des Spritzgusswerkzeugs 20 nach Vollendung dieser Drehung ist in Fig. 6 dargestellt. In dieser Offenstellung wird ein weiteres Paar von Armierungskomponenten 11 in die Spritzgussformabschnitte 24 in den linken Randabschnitt 22 eingelegt. Das Spritzgusswerkzeug 20 wird nachfolgend wieder in die Schließstellung verbracht. Nun wird über beide Angusskanäle 25, 27 plastifizierte Kunststoffmasse in die Spritzgussformabschnitte 24 und 26 eingefüllt.

In den ersten Spritzgussformabschnitten 24 wird wieder die erste Spritzgusskomponente ausgebildet, wie oben im Zusammenhang mit Fig. 5 beschrieben. In den zweiten Spritzgussformabschnitten 26, die randabschnittsseitig tiefer ausgeführt sind als die ersten Spritzgussformabschnitte 24, wird jeweils die zweite Spritzgusskomponente, also die Deckkomponente 10, erzeugt (vgl. Fig. 7). Dabei verbindet sich die anfangs heiße eingefüllte plastifizierte Kunststoffmasse über die ihr zugewandte Haftvermittlerschicht mit der Armierungskomponente 11. Das Spritzgusswerkzeug 20 wird sodann wieder in die Offenstellung verbracht und das in den zweiten Spritzgussformabschnitten 26 erzeugte Verbund-Bauteil mit Hilfe eines nicht dargestellten Auswerfers ausgestoßen. Anschließend werden die im Zusammenhang mit den Fig. 6 und 7 schon erläuterten Verfahrensschritte wiederholt. Bei jedem Spritzschritt wird in den Spritzgussformabschnitten 24 jeweils ein Zwischenbauteil, bestehend aus der Armierungskomponente 11 und der Trägerkomponente 2, und ein fertiges Verbund-Bauteil 1, bestehend aus der Armierungskomponente 11, der Trägerkomponente 2 und der Deckkomponente 10, hergestellt. Der Gesamtvorgang mit den Schritten Öffnen des Spritzgusswerkzeugs 20, Einlegen der beiden Armierungskomponenten 11, Drehen des Mittelabschnitts um 180°, Schließen des Spritzgusswerkzeugs 20, Spritzen und Auswerfen des fertigen Verbund-Bauteils 1 wiederholt sich sodann zyklisch und bevorzugt taktweise.

Ein alternatives Verfahren zur Herstellung eines Verbund-Bauteils 1 nach den Fig. 1 bis 3 mit Hilfe eines alternativen zweiteiligen Spritzgusswerkzeugs 29 wird nachfolgend beschrieben. Verfahrensdetails, die denjenigen entsprechen, die vorstehend schon im Zusammenhang mit dem Verfahren unter Bezugnahme auf die Fig. 4 bis 7 beschrieben wurden, werden nicht nochmals im einzelnen erläutert.

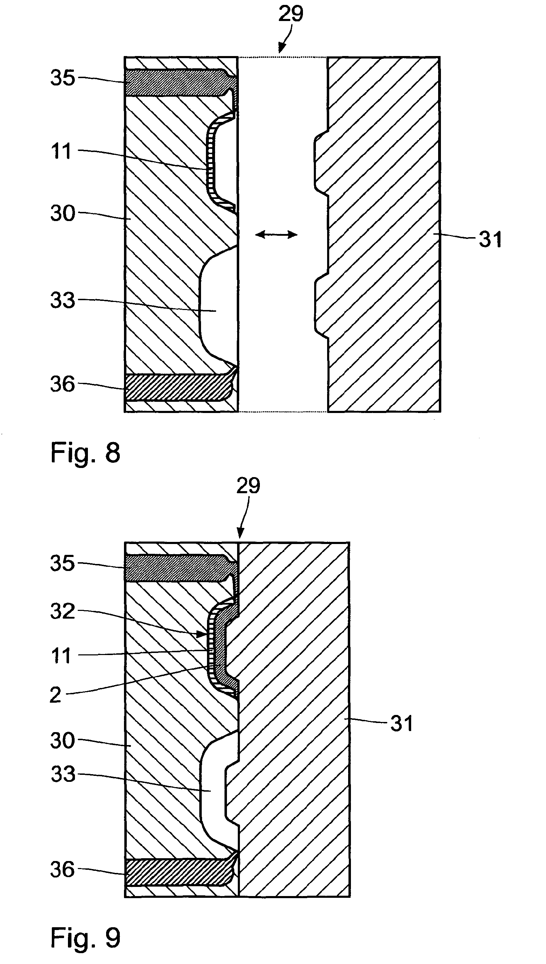

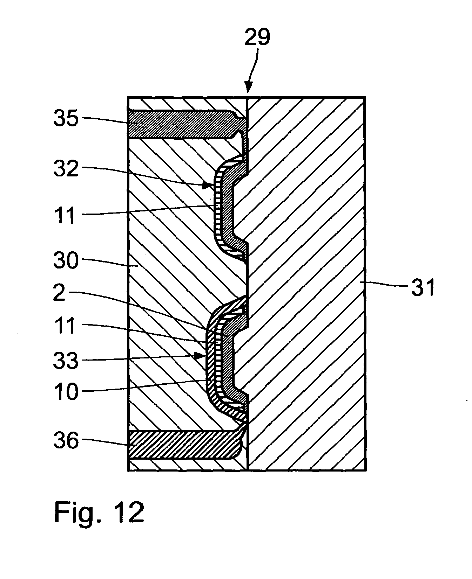

Das Spritzgusswerkzeug 29 weist zwei Werkzeugabschnitte 30, 31 auf. Diese können längs eines in Fig. 8 dargestellten Doppelpfeils zwischen einer Offenstellung nach den Fig. 8, 10 und 11 und einer Schließstellung nach den Fig. 9 und 12 verlagert werden. In Schließstellung sind zwischen den beiden Werkzeugabschnitten 30, 31 zwei Spritzgussformabschnitte 32, 33 begrenzt. Zusätzlich zur Verlagerbarkeit längs des Doppelpfeils in Fig. 8 ist der rechte Werkzeugabschnitt 31 in der Offenstellung des Spritzgusswerkzeugs 29 um eine in der Zeichnung horizontale und in der Zeichenebene liegende Drehachse 34 drehbar.

Im linken Werkzeugabschnitt 30 sind zwei Angusskanäle 35, 36 ausgeführt. Der in der Zeichnung obere Angusskanal 35 ist mit dem ersten Spritzgussformabschnitt 32 und der in der Zeichnung untere zweite Angusskanal 36 ist mit dem zweiten Spritzgussformabschnitt 33 verbunden.

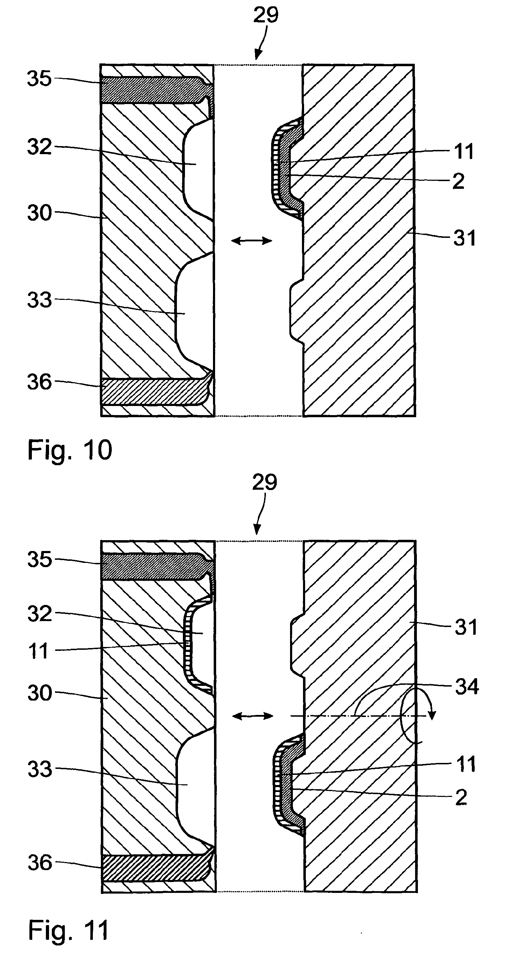

Nachfolgend wird die Herstellung von Verbund-Bauteilen 1 mit dem Spritzgusswerkzeug 29 beschrieben. Zunächst wird die Armierungskomponente 11 in den oberen Spritzgussformabschnitt 32 eingelegt. Dabei liegt das Spritzgusswerkzeug 29 in Offenstellung vor. Diese Situation ist in Fig. 8 dargestellt. Anschließend wird das Spritzgusswerkzeug 29 geschlossen und es folgt der erste Spritzschritt. Wie oben im Zusammenhang mit dem Verfahren nach den Fig. 4 bis 7 erläutert, kann ein Einspritzen in den zweiten Spritzgussformabschnitt 33 beim allerersten Spritzvorgang unterbleiben (vgl. Fig. 9). Unterbleibt dieser Spritzvorgang nicht, wird das allererste, im unteren Spritzgussformabschnitt 33 gespritzte Bauteil verworfen. Im oberen Spritzgussformabschnitt 32 entsteht nach dem Spritzen das Zwischenbauteil, wie oben im Zusammenhang mit den Fig. 4 bis 7 erläutert. Anschließend wird das Spritzgusswerkzeug 29 wieder in die Offenstellung überführt. Dies ist in Fig. 10 dargestellt. Beim Öffnen des Spritzgusswerkzeugs 29 haftet das Zwischenbauteil am rechten Werkzeugabschnitt 31. Sodann wird der rechte Werkzeugabschnitt um die Drehachse 34 um 180° gedreht, so dass das Spritzgusswerkzeug 29 wie in Fig. 11 dargestellt orientiert ist. In den Spritzgussformabschnitt 33 wird sodann wieder eine neue Armierungskomponente 11 eingelegt. Anschließend wird das Spritzgusswerkzeug 29 wieder geschlossen. Es erfolgt nun wiederum ein Spritzschritt, wobei im oberen Spritzgussformabschnitt 32 das Zwischenbauteil und im unteren Spritzgussformabschnitt 33 das Verbund-Bauteil 1 entsteht (vgl. Fig. 1). Nach dem Öffnen des Spritzgusswerkzeugs 29 wird das hergestellte Verbund-Bauteil ausgestoßen. Anschließend wird der Vorgang, der oben im Zusammenhang mit den Fig. 10 bis 12 beschrieben wurde, zyklisch und insbesondere taktweise wiederholt.

Die Spritzgussformabschnitte 24, 26, 32, 33 können insbesondere auch so geformt sein, dass Halteelemente nach Art der Halteelemente, die oben im Zusammenhang mit dem Verbund-Bauteil 1 nach den Fig. 1 - 3 beschrieben wurden, einstückig an die Trägerkomponente 2 angeformt werden. Die Spritzgussformabschnitte 24, 26, 32, 33 werden auch als Formnester bezeichnet. Pro Spritzgusswerkzeug 20, 29 kann bei einer weiteren, nicht dargestellten Ausführungsform auch eine größere Anzahl von Spritzgussformabschnitten 24, 26, 32, 33 vorgesehen sein.

Die Armierungskomponente 11 kann bei fertig gestelltem Verbund-Bauteil 1 allseits von den Kunststoffkomponenten 2, 10 umschlossen sein. Dies ist insbesondere aus Korrosionsschutzgründen wünschenswert. Eine derartige Umhüllung ist allerdings nicht zwingend. Die Armierungskomponente 11 kann in die ersten Spritzgussformabschnitte 24, 32 eingelegt werden, noch während eine Drehung des Werkzeugabschnitts 21 bzw. 31 um die Achse 28 bzw. 34 erfolgt.

Insbesondere ist die Trägerkomponente 2 aus einem Kunststoffmaterial gefertigt, dessen Shorehärte größer ist als diejenige des Kunststoffmaterials, aus dem die Deckkomponente 10 gefertigt ist.

Beim beschriebenen Ausführungsbeispiel ist die Armierungskomponente 11 aus Stahl. Die Armierungskomponente 11 kann auch aus Aluminium oder einem Faserverbundwerkstoff gefertigt sein.

## Patentansprüche

1. Verfahren zur Herstellung eines Verbund-Bauteils (1) mit einer Trägerkomponente (2) aus Kunststoff, einer Deckkomponente (10) aus Kunststoff und einer zwischen der Trägerkomponente (2) und der Deckkomponente (10) angeordneten Armierungskomponente (11) aus Metall, **gekennzeichnet durch** folgende Schritte:
- Herstellen der Armierungskomponente (11),
- Bereitstellen der Armierungskomponente (11) in einer Spritzguss-Form (24, 26; 32, 33) eines Spritzgusswerkzeugs (20; 29),
- Mehrkomponenten-Spritzgießen der Trägerkomponente (2) und der Deckkomponente (10) in der Spritzgussform (24, 26; 32, 33),
- Entnehmen des Verbund-Bauteils (1) aus der Spritzguss-Form (24, 26; 32, 33).

2. Verfahren nach Anspruch 1, **dadurch gekennzeichnet, dass** das Bereitstellen und das Mehrkomponenten-Spritzgießen in einem Spritzgusswerkzeug (20)
- mit drei relativ zueinander beweglichen Werkzeugabschnitten (21 bis 23),
- wobei ein Mittelabschnitt (21) zwischen zwei Randabschnitten (22, 23) liegt,
- und zwischen dem Mittelabschnitt (21) und dem ersten Randabschnitt (22) mindestens ein erster Spritzgussformabschnitt (24)
- und zwischen dem Mittelabschnitt (21) und dem zweiten Randabschnitt (23) mindestens ein zweiter Spritzgussformabschnitt (26) begrenzt ist,
folgendermaßen abläuft:
- Einlegen der Armierungskomponente (11) in den ersten Spritzgussformabschnitt (24),
- Spritzgießen der Trägerkomponente (2) im ersten Spritzgussformabschnitt (24),
- Verlagern des Zwischenprodukts mit der Armierungskomponente (11) und der angespritzten Trägerkomponente (2) mit dem Mittelabschnitt (21) derart, dass das Zwischenprodukt im zweiten Spritzgussformabschnitt (26) zu liegen kommt,
- Spritzgießen der Deckkomponente (10) im zweiten Spritzgussformabschnitt (26).

3. Verfahren nach Anspruch 1, **dadurch gekennzeichnet, dass** das Bereitstellen und das Mehrkomponenten-Spritzgießen in einem Spritzgusswerkzeug (29)
- mit zwei relativ zueinander beweglichen Werkzeugabschnitten (30, 31), zwischen denen mindestens zwei Spritzgussformabschnitte (32, 33) begrenzt sind,
folgendermaßen abläuft:
- Einlegen der Armierungskomponente (11) in den ersten Spritzgussformabschnitt (32),
- Spritzgießen der Trägerkomponente (11) im ersten Spritzgussformabschnitt (32),
- Verlagern des Zwischenprodukts mit der Armierungskomponente (11) und der angespritzten Trägerkomponente (2) mit einem der Werkzeugabschnitte (31) derart, dass das Zwischenprodukt im zweiten Spritzgussformabschnitt (33) zu liegen kommt,
- Spritzgießen der Deckkomponente (10) im zweiten Spritzgussformabschnitt (33).

4. Verfahren nach einem der Ansprüche 2 oder 3, **dadurch gekennzeichnet, dass**, nachdem ein erstes Zwischenprodukt im zweiten Spritzgussformabschnitt (26; 33) vorliegt, während des Spritzgießens im zweiten Spritzgussformabschnitt (26; 33) zum Aufbringen der Deckkomponente (10) auf das Zwischenprodukt das Spritzgießen im ersten Spritzgussformabschnitt (24; 32) zur Herstellung eines weiteren Zwischenprodukts erfolgt, wobei insbesondere während des Verlagerns des Zwischenprodukts hin zum zweiten Spritzgussformabschnitt (26; 33) das Einlegen der Armierungskomponente (11) in den ersten Spritzgussformabschnitt (24; 32) erfolgt.

5. Verfahren nach einem der Ansprüche 1 bis 4, **dadurch gekennzeichnet, dass** die Armierungskomponente (11) durch Tiefziehen hergestellt wird.

6. Verbund-Bauteil (1)
- mit einer Trägerkomponente (2) aus Kunststoff,
- mit einer Deckkomponente (10) aus Kunststoff,
- mit einer zwischen der Trägerkomponente (2) und der Deckkomponente (10) angeordneten Armierungskomponente (11) aus Metall,
**dadurch gekennzeichnet, dass** die Trägerkomponente (2) und die Deckkomponente (10) als Einzelkomponenten eines Mehrkomponenten-Spritzgussverbundes ausgebildet sind.

7. Verbund-Bauteil nach Anspruch 6, **dadurch gekennzeichnet, dass** die Trägerkomponente (2) aus einem Kunststoffmaterial gefertigt ist, dessen Shorehärte größer ist als diejenige des Kunststoffmaterials, aus dem die Deckkomponente (10) gefertigt ist.

8. Verbund-Bauteil nach Anspruch 6 oder 7, **gekennzeichnet durch** eine Armierungskomponente (11) aus Stahl.

9. Verbund-Bauteil nach einem der Ansprüche 6 bis 8, **gekennzeichnet durch** an die Trägerkomponente (2) angeformte Befestigungselemente (4, 5; 12, 16, 17).

10. Verbund-Bauteil nach Anspruch 9, **dadurch gekennzeichnet, dass** die Befestigungselemente (5; 12; 17) als Clipselemente ausgeführt sind.

11. Verbund-Bauteil nach Anspruch 9 oder 10, **dadurch gekennzeichnet, dass** die Armierungskomponente (11) derart flächig ausgestaltet ist, dass sie die Befestigungselemente (5; 12; 17) vollständig überdeckt, so dass die Armierungskomponente (11) zumindest abschnittsweise zwischen den Befestigungselementen (5; 12; 17) und der Deckkomponente (10) liegt.
